# EUROPEAN PATENT SPECIFICATION

(11) **EP 0 677 453 B1**
(45) Date of publication and mention of the grant of the patent: **23.12.1998**
(21) Application number: 95302311.6
(22) Date of filing: 06.04.1995
(51) Int. Cl.: B65D 71/50

(54) **Carrier and package including it**
Träger sowie Packung, die diesen enthält
Dispositif de portage et emballage le comportant

(30) Priority: 13.04.1994 US 226886
(43) Date of publication of application: 18.10.1995
(73) Proprietor: ILLINOIS TOOL WORKS INC., Glenview, Illinois 60025-5811 (US)
(72) Inventor: Weaver, William N., Northbrook, Illinois 60062 (US)
(74) Representative: Rackham, Stephen Neil

(56) References cited:
- EP-A- 0 219 590
- EP-A- 0 253 038
- EP-A- 0 322 312
- US-A- 4 219 117
- US-A- 4 557 375

## Description

This invention is generally directed to a plastics carrier and a package including the carrier for a group of items, such as bottles which hold beverage.

Bar codes are widely used on items so that information about the item, such as price, can be easily and quickly read by scanning the bar code with a bar code reader beam. When the bar code is scanned, the bar code number is input into a computer to retrieve stored information about the item.

When items are grouped together in a package for sale, each item typically includes an individual machine readable bar code. The package is additionally labelled with a bar code which corresponds to the price of the group of items.

In a package that has a substantially transparent carrier, e.g. a band type carrier as shown in US-A-4,219,117 or US-A-4,557,375, when the package is scanned for a price, a bar code from an individual item could be scanned instead of the bar code on the package itself. If this occurs, information which correlates to the individual item would be retrieved and the purchaser of the package will be charged the individual price instead of the group package price. This can result in significant losses to the seller.

The present invention is intended to overcome or minimize these problems.

EP-A-0,253,038 and EP-A-0,322,312 disclose the use of a plastics carrier for blocking light having a narrow wavelength such as that emitted by a bar code reader so that individual machine readable bar codes or items within a package are unreadable.

According to this invention a substantially transparent carrier for carrying a group of items, each item including an individual machine readable bar code thereon, is characterised in that the carrier comprises a plastics material including an effective amount of a chemical blocking agent therein for blocking light having a narrow wavelength such as that emitted by a bar code reader, the chemical blocking agent altering the plastics material on a molecular level, so that when the individual machine readable bar codes are at least partially covered by the carrier they are unreadable.

The invention also embraces a package including such a carrier.

Preferably the package or the carrier also includes a machine readable bar code thereon. Each individual item includes an individual machine readable bar code thereon which is at least partially covered by the carrier. The chemical blocking agent is "tuned" to be capable of blocking, by reflection or absorption, light having narrow wavelength bands of the typical bar code readers, e.g. approximately 630 nanometers for Helium/Neon bar code readers and about 670 nanometers for the newer technology solid state laser bar code readers, while allowing the bar code on the package or carrier to he read.

A particular example of a carrier and package in accordance with this invention will now be described with reference to the accompanying drawings, wherein like reference numerals identify like elements and in which:-
FIGURE 1 is a perspective view of a package of bottles held together by a carrier; and,
FIGURE 2 s a graph plotting the wavelength of a typical solid state laser bar code reader versus optical density of the carrier.

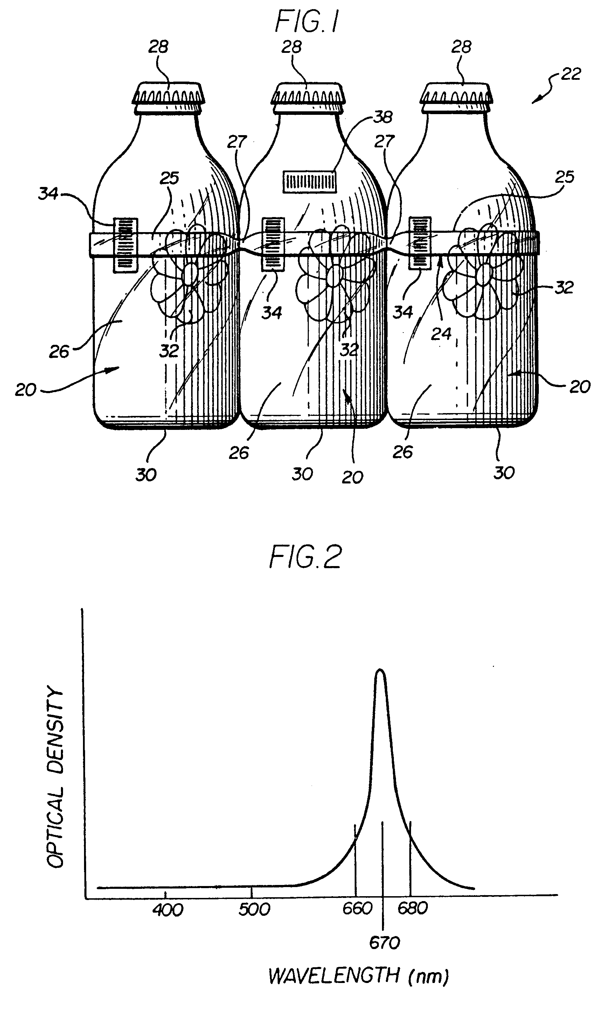

As shown in FIGURE 1, a plurality of items, e.g. bottles, 20 are grouped together and surrounded by a carrier 24. The items 20 shown in FIGURE 1 are typical bottles which hold beverages, each of which include a cylindrical side wall 26 having an exterior face, a top 28 and a bottom wall 30. The exterior face of the side wall 26 can be decorated with graphics or writing 32 for aesthetics or identification of the product.

The exterior face of each item 20 also includes a machine readable bar code 34 printed thereon. The bar code 34 on each individual item 20 allows the item 20 to be scanned by a bar code reader (not shown). When the bar code 34 on the item 20 is scanned by a bar code reader, information, such as the price, about the individual item 20 is retrieved from a computer attached to the bar code reader.

The carrier 24 groups the items 20 together so that a group of items 20 may be sold as a package 22. The package 22 may have a machine readable bar code 38 on it, or alternatively a machine readable bar code may be on the carrier 24, which allows information about the package, such as the price of the group of items 20, to be retrieved when the bar code 38 is scanned by a bar code reader beam. The bar code 38 may be printed on the exterior of the package 22 or carrier 24 or otherwise affixed to the package 22 or carrier 24 by suitable means, such as adhesive.

The typical bar code scanner or reader (not shown) used today is a Helium/Neon laser bar code reader beam which emits light in a wavelength of about 630 nanometers to scan and read a bar code on an item or package. Newer technology solid state laser bar code readers emit light in a wavelength of about 670 nanometers.

The carrier 24 of the present invention is substantially transparent and is made of a suitable plastic material, such as low to medium density polyethylene. The plastic material includes a chemical blocking agent, such as a "dye," that alters the plastic material of the carrier 24 on a molecular level to change the optical density of the plastic material. As examples, Spectra Science Corporation Dye #1043, may be used as a chemical blocking agent. The amount of chemical blocking agent that is used in the present invention is an effective amount that will absorb or reflect light having a wavelength of about 660 to 680 nanometers from a typical solid state laser bar code reader beam. Such an effective amount is sufficient to either absorb or reflect the reader light beam so that the reader cannot read the bar codes 34 on the bottles 20 which are covered, at least partially by the carrier 24. As shown on the graph in FIGURE 2, the optical density, when including dye of the type contemplated by the present invention, will selectively block the light at wavelengths between about 660 and 680 nanometers, which are the approximate wavelengths emitted from the solid state laser reader beam, by reflection or absorption.

The carrier 24 of the present invention is substantially transparent so as to not detract or obscure graphics or writing 32 on the bottles 20. By using a dye that varies the plastic material on a molecular level, rather than pigments comprising particles dispersed in the plastic, to change the optical density of the material, the substantial transparency of the plastic material is not altered. When particles, such as micas or metal oxides, are dispersed in the carrier transparency is compromised.

As shown in FIGURE 1, the carrier 24 is made of a plurality of bands 25 which surround each individual bottle 20 and contact each bottle 20 along its side wall 26. The bands are integrally joined at 27. To prevent the bar code 34 on an individual bottle 20 from being read by a bar code reader beam, the carrier 24 of the present invention is placed in a position along the side wall 26 which at least partially covers each bar code 34 on each individual bottle 20. It is within the scope of the invention that the carrier 24 completely covers the bar codes 34 on the individual bottles 20.

When the laser reader beam scans the package, the carrier material will absorb or reflect the light which is emitted by the laser reader. Thus, the covered bar codes 34 on the individual bottles 20 cannot be read by the reader.

The items 20 shown in FIGURE 1 are typical bottles which hold beverages, however, it is to be understood that other types of items, such as boxes may be grouped together and surrounded by the carrier 24. Also, as shown in FIGURE 1, the carrier 24 is a continuous band that encircles each bottle 20. It is to be understood that the carrier 24 may be of a variety of forms, such as a sheet of plastic formed to fit around the items.

## Claims

1. A substantially transparent carrier (24) for carrying a group of items (20), each item including an individual machine readable bar code (34) thereon, characterised in that the carrier (24) comprises a plastics material including an effective amount of a chemical blocking agent therein for blocking light having a narrow wavelength such as that emitted by a bar code reader, the chemical blocking agent altering the plastics material on a molecular level, so that when the individual machine readable bar codes (34) are at least partially covered by the carrier (24) they are unreadable.

2. A carrier as defined in claim 1, wherein said light is blocked by the chemical blocking agent absorbing or reflecting it.

3. A carrier defined in claim 1 or 2, wherein the substantially transparent plastics material is polyethylene.

4. A carrier as defined in any preceding claim, wherein the chemical blocking agent is a dye which alters the plastics material on a molecular level and blocks light transmitted at the narrow band width consistent with the band width of a bar code reader.

5. A carrier defined in any preceding claim, wherein the chemical blocking agent blocks light having a wavelength in a narrow range around 630 nanometers or in a narrow range between about 660 to 680 nanometers.

6. A carrier as defined in any preceding claim, wherein the carrier (24) is a band type carrier including band segments (25) for gripping the individual items (20).

7. A carrier as defined in any preceding claim, wherein the carrier (24) includes a machine readable bar code (38).

8. A package (22) comprising a group of items (20) each of which includes an individual machine readable bar code (34) on it and a substantially transparent carrier (24) in accordance with any of claims 1 to 7, the carrier (24) extending around the items (20) and at least partially covering the individual bar codes (34) on the items (20) so that they are unreadable by a bar code reader.

9. A package as defined claim 8, which also includes a separate machine readable bar code (38) on the carrier (24).

## Patentansprüche

1. Im wesentlichen transparenter Träger (24) zum Tragen einer Gruppe von Gegenständen (20), wobei jeder Gegenstand auf sich einen individuellen, maschinenlesbaren Strichkode (34) aufweist, dadurch gekennzeichnet, daß der Träger (24) ein Kunststoffmaterial mit einem beträchtlichen Anteil eines chemischen Blockiermittels zum Blockieren von Licht mit einer geringen Wellenlänge, wie zum Beispiel dem, welches von einem Strichkode-Leser emittiert wird, aufweist, wobei das chemische Blockiermittel das Kunststoffmaterial auf molekularer Ebene verändert, so daß die individuellen, maschinenlesbaren Strichkodes (34) unlesbar sind, wenn sie mindestens teilweise von dem Träger (24) bedeckt sind.

2. Träger nach Anspruch 1, wobei das Licht durch Absorbieren oder Reflektieren von dem chemischen Blockiermittel blockiert ist.

3. Träger nach Anspruch 1 oder 2, wobei das im wesentlichen transparente Kunststoffmaterial Polyethylen ist.

4. Träger nach einem der vorhergehenden Ansprüche, wobei das chemische Blockiermittel ein Farbstoff ist, welcher das Kunststoffmaterial auf einer molekularen Ebene verändert und Licht blockiert, welches mit einer geringen Bandbreite in Übereinstimmung mit der Bandbreite eines Strichkode-Lesegeräts gesendet wird.

5. Träger nach einem der vorhergehenden Ansprüche, wobei das chemische Blockiermittel Licht mit einer Wellenlänge in einem engen Bereich um 630 Nanometer oder in einem engen Bereich zwischen ungefähr 660 und 680 Nanometer blockiert.

6. Träger nach einem der vorhergehenden Ansprüche, wobei der Träger (24) ein bandartiger Träger mit Bandsegmenten (25) zum Greifen der einzelnen Gegenstände (20) ist.

7. Träger nach einem der vorhergehenden Ansprüche, wobei der Träger (24) einen maschinenlesbaren Strichkode (38) umfaßt.

8. Verpackungseinheit (22) mit einer Gruppe von Gegenständen (20), von denen jeder einen individuellen, maschinenlesbaren Strichkode (34) auf sich aufweist, und mit einem im wesentlichen transparenten Träger (24) nach einem der Ansprüche 1 bis 7, wobei der Träger (24) sich um die Gegenstände (20) erstreckt und mindestens teilweise die individuellen Strichkodes (34) auf den Gegenständen (20) bedeckt, so daß diese für ein Strichkode-Lesegerät unlesbar sind.

9. Verpackungseinheit nach Anspruch 8 zusätzlich mit einem separaten maschinenlesbaren Strichkode (38) auf dem Träger (24).

## Revendications

1. Support sensiblement transparent (24) pour porter un groupe d'objets (20), chaque objet comportant sur lui un code-barres individuel (34) pouvant être lu par machine, caractérisé en ce que le support (24) est en une matière plastique contenant une quantité efficace d'agent chimique de blocage destiné à bloquer une lumière incluse dans une bande étroite de longueurs d'onde telle que celle émise par un lecteur de code-barres, l'agent chimique de blocage modifiant la matière plastique pour lui conférer un niveau moléculaire tel que, lorsque les codes-barres individuels (34) pouvant être lus par machine sont au moins partiellement recouverts par le support (24), ils sont illisibles.

2. Support selon la revendication 1, dans lequel ladite lumière est bloquée par l'agent chimique de blocage qui l'absorbe ou la réfléchit.

3. Support selon la revendication 1 ou 2, dans lequel la matière plastique sensiblement transparente est du polyéthylène.

4. Support selon l'une quelconque des revendications précédentes, dans lequel l'agent chimique de blocage est une teinture qui modifie la matière plastique pour la mettre à un certain niveau moléculaire et bloque la lumière transmise dans la largeur de bande étroite qui est conforme à la largeur de bande d'un lecteur de codes-barres.

5. Support selon l'une quelconque des revendications précédentes, dans lequel l'agent chimique de blocage bloque la lumière ayant une longueur d'onde comprise dans une plage étroite située aux environs de 630 nanomètres ou dans une plage étroite comprise entre environ 660 et 680 nanomètres.

6. Support selon l'une quelconque des revendications précédentes, dans lequel le support (24) est un support de type en bande qui comprend des segments de bande (25) destinés à enserrer les objets individuels (20).

7. Support selon l'une quelconque des revendications précédentes, dans lequel le support (24) comporte un code-barres (38) pouvant être lu par machine.

8. Emballage (22) comprenant un groupe d'objets (20) dont chacun comporte sur lui un code-barres individuel (34) pouvant être lu par machine et un support sensiblement transparent (24) tel que spécifié dans l'une quelconque des revendications 1 à 7, le support (24) étant disposé autour des objets (20) et recouvrant au moins partiellement les codes-barres individuels (34) situés sur les objets (20) de manière qu'ils soient illisibles par un lecteur de code-barres.

9. Emballage selon la revendication 8, qui comprend également sur le support (24) un code-barres séparé (38) pouvant être lu en machine.
